(19) Europäisches Patentamt
European Patent Office
Office européen des brevets

(11) **EP 1 089 060 A1**

(12) **EUROPEAN PATENT APPLICATION**

(43) Date of publication:
04.04.2001 Bulletin 2001/14

(51) Int Cl.[7]: **G01F 1/60**, G01F 1/58

(21) Application number: 99203094.0

(22) Date of filing: 22.09.1999

(84) Designated Contracting States:
AT BE CH CY DE DK ES FI FR GB GR IE IT LI LU MC NL PT SE
Designated Extension States:
AL LT LV MK RO SI

(71) Applicant: **Liu, Weihong**
2353 DL Leiderdorp (NL)

(72) Inventor: **Liu, Weihong**
2353 DL Leiderdorp (NL)

(54) **Electrodynamic flow meter**

(57)     An electrodynamic flow meter measures a flow rate of either non-conductive fluid (i.e. petrol) or conductive fluid (i.e. city water) in a pipe and, has two different configurations. One is the electrodynamic flow meter inductance model in Fig. 1 and Fig. 2 (hereafter: EDF-IM). The other is electrodynamic flow meter capacitance model in Fig. 3 and Fig. 4 (hereafter: EDF-CM).

According to the principle of Lorentz transformation, the flow relative motion in an alternative magnetic field can bring out an electric signal that indicates the velocity of the flow relative motion. Both EDF-IM and EDF-CM comply with the principle of the Lorentz transformation.

Fig. 1

Printed by Jouve, 75001 PARIS (FR)

## Description

The technical field that the invention concerns is that an electrodynamic flow meter is able to measure a flow rate of either non-conductive fluid (i.e. petrol) or conductive fluid (i.e. city water) in a pipe without flow restriction pressure drop. The invention is a kind of flow meter that can be applied in various flow measurements in industries.

The state of art of flow measurements in the pipes indicates that the various flow meters can generally be classified in two categories: one is the flow meters with the pressure drop, and the other is the flow meters without the pressure drop. The flow meters with the pressure drop (i.e. orifice plate, vortex, Coriolis, target, Venturi and positive-displacement flow meter etc.) bring about some problems that are caused by wasting flow kinetic energy and measuring errors. The measuring errors could be caused by the fluids' solidity; crystallization; flashing; cavitation and/or noise etc. The flow meters without the pressure drop are mainly the conventional electromagnetic flow meter and the ultrasonic flow meter in the industrial services. The conventional electromagnetic flow meter can measure conductive flow only. As the accuracy of the ultrasonic flow meter is lower, so the ultrasonic flow meter can only be used in a few cases.

The similar state of art of the flow meter to the invention is the conventional electromagnetic flow meter. The conventional electromagnetic flow meter has two windings and two electrodes. The two electrodes of the conventional electromagnetic flow meter can measure the electrical potential that is based on Faraday law, and have to expose to the conductive fluid in the pipe. The conventional electromagnetic flow meter can not measure non-conductive flow, but massive flow measurements in industries are non-conductive flow measurements.

The operation principle of the invention on disclosure is that the invention operates on the principle of Lorentz transformation. According to the principle of Lorentz transformation, the flow relative motion in an alternative magnetic field can bring out an alternative electric signal that indicates the velocity of the flow relative motion. The invention has two different configurations: one is electrodynamic flow meter inductance model (hereafter, EDF-IM), the other is electrodynamic flow meter capacitance model (hereafter, EDF-CM). Both EDF-IM and EDF-CM comply with the principle of the Lorentz transformation.

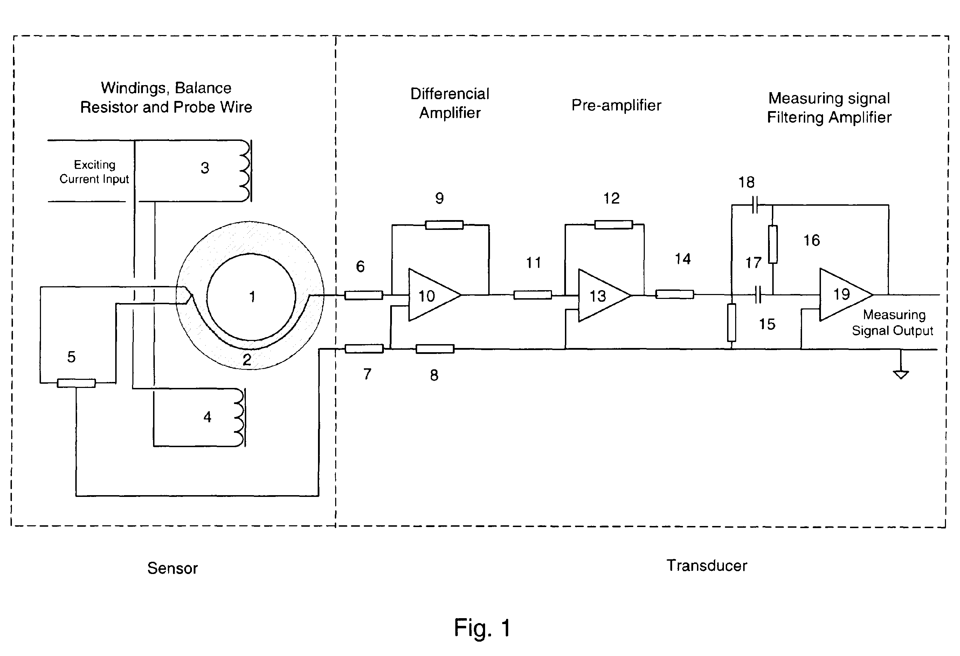

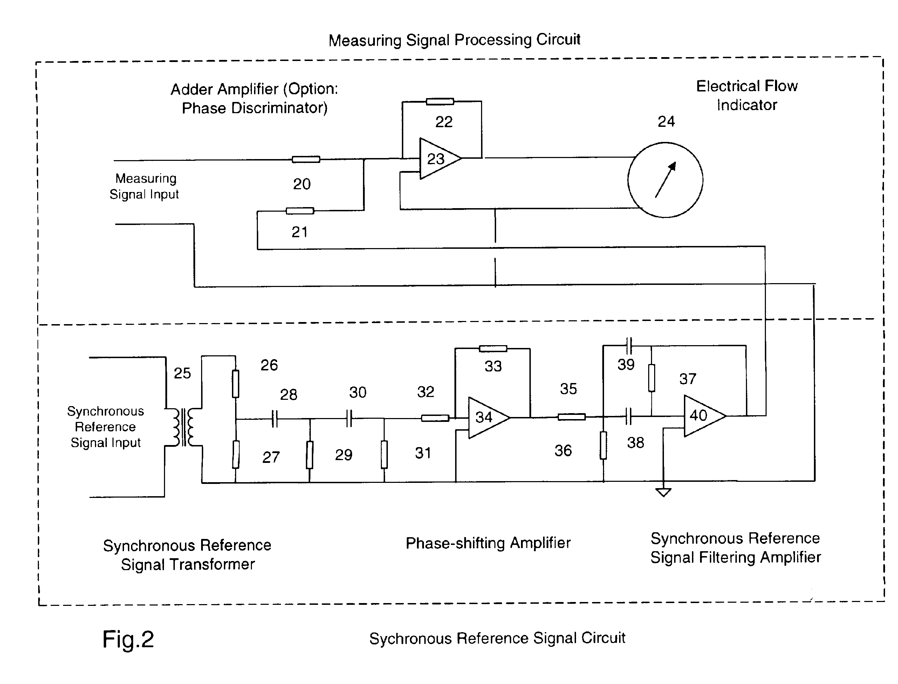

The EDF-IM in Fig.1 has at least one exciting winding (3) that radiates an alternate magnetic field into the flow. The EDF-IM in Fig.1 has at least one probe wire (2) that measures the alternative electric filed amplitude and phase. The alternative electric filed amplitude and phase are transformed by the flow rate and based on the principle of Lorentz transformation. The probe wire (2) of the EDF-IM in Fig.1 is insulated from the fluid and embedded in the wall coating of the flow tube (1). The transducer circuit in Fig. 1 outputs a measuring signal to the measuring signal processing circuit in Fig. 2. The EDF-IM in Fig. 2 has the synchronous reference signal transformer (25) for producing a synchronous reference signal against the exciting current in the winding (3). The amplitude of the synchronous reference signal can compare with the amplitude of the measuring signal to produce a flow rate signal at the output of the adder amplifier (23). As an option, the phase of the synchronous reference signal can compare with the phase of the measuring signal to produce a flow rate signal at the output of the phase discriminator circuit when the phase discriminator circuit replaces the adder amplifier circuit in Fig. 2. The relation between the electric field measuring signal and the exciting magnetic field of the EDF-IM satisfies:

$$E = K_1 K_2 \frac{1 + K_3 v}{1 + K_4 v} H$$

Where: E, Electric field; $K_1$, Instrument factor; $K_2$, Fluid property factor; $K_3$, The first fluid transformation factor; $K_4$, The second fluid transformation factor; v, Flow velocity; H, Magnetic field in the core of the winding (3).

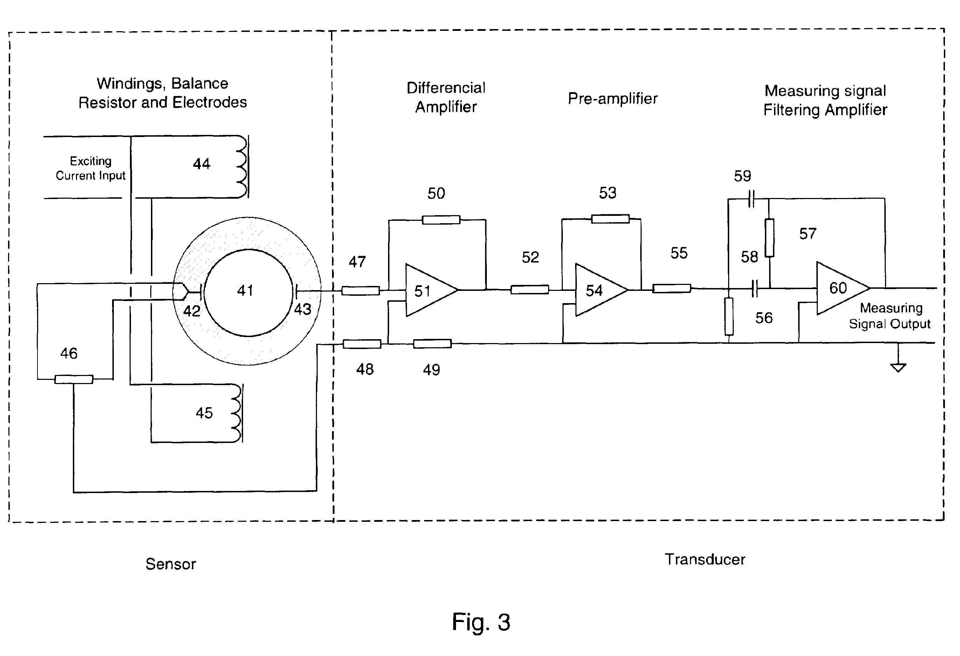

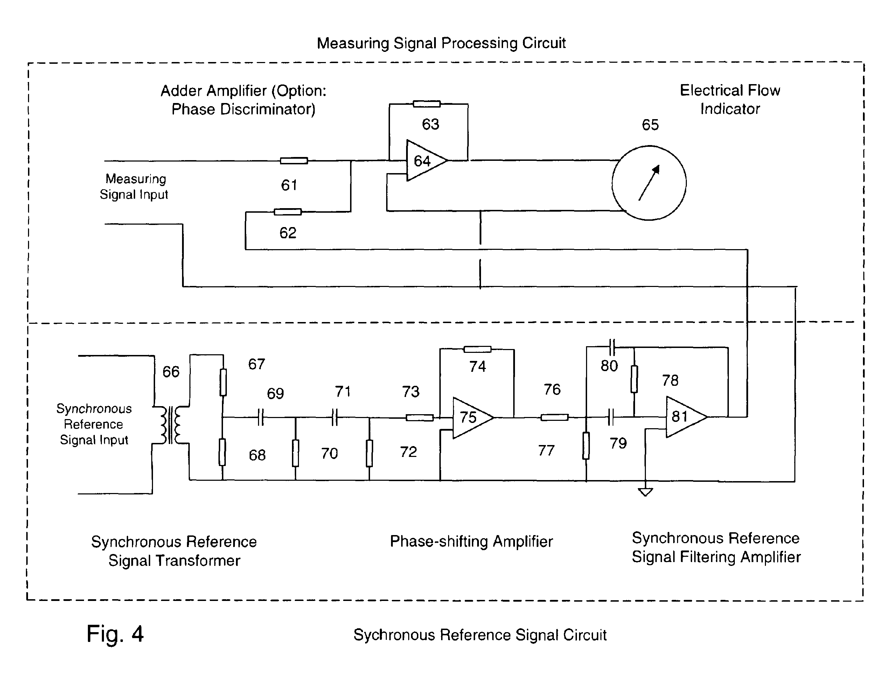

The EDF-CM in Fig. 3 has at least one exciting winding (44) that radiates an alternate magnetic field into the flow. The EDF-CM in Fig. 3 has at least two probe electrodes (42) and (43) that measures the alternative electric displacement amplitude and phase The alternative electric displacement amplitude and phase are transformed by the flow rate and based on the principle of Lorentz transformation. The two probe electrodes (42) and (43) of the EDF-CM in Fig.3 are insulated from the fluid and embedded in the wall coating of the flow tube (41). The transducer circuit in Fig. 3 outputs a measuring signal to the measuring signal processing circuit in Fig. 4. The EDF-CM in Fig. 4 has the synchronous reference signal transformer (66) for producing a synchronous reference signal against the exciting current in the winding (44). The amplitude of the synchronous reference signal can compare with the amplitude of the measuring signal to produce a flow rate signal at the output of the adder amplifier (64). As an option, the phase of the synchronous reference signal can compare with the phase of the measuring signal to produce a flow rate signal at the output of the phase discriminator circuit when the phase discriminator circuit replaces the adder amplifier circuit in Fig. 4. The relation between the electric displacement measuring signal and the exciting magnetic field of the EDF-CM satisfies:

$$D = K_5 K_6 v H$$

Where: D, Electric displacement; $K_5$, Instru-

ment factor; $K_6$, Fluid property factor; v, Flow velocity; H, Magnetic field in the core of the winding (44).

The problems that the invention solves are that the electrodynamic flow meter can measure non-conductive fluid in the pipe that is nowadays' massive flow measurements in industries. Since the conventional electromagnetic flow meter can not measure the non-conductive flows, so the applications of the conventional electromagnetic flow meters have been limited in the industrial services. The conventional electromagnetic flow meter has two windings and two electrodes for flow measuring in conductive fluid in the pipe. The two electrodes of the conventional electromagnetic flow meter have to expose to the conductive fluid in the pipe by measuring the electrical potential; therefore the various noises are able to disturb the flow-measuring signal. Neither the probe wire nor the electrodes of the invention are exposed to the fluid in the flow tube. Therefore no contact noises disturb the flow-measuring signal of the EDF-IM and the EDF-CM. Because the invention has no flow restriction pressure drop cross the flow tube, many application problems can be avoided such as the wasting flow kinetic energy and the measuring errors. The measuring errors could be caused by the fluids' solidity; crystallization; flashing; cavitation and/or noise etc.

The advantages of the invention of either EDF-IM or EDF-CM are without flow restriction pressure drop cross the flow tubes which saves kinetic energy of the flows, insulated both probe wire and two probe electrodes from the fluid in the flow tube which avoid various electric potential disturbances. Because either EDF-IM or EDF-CM has no any flow restriction in the flow tube, therefore the fluid's solidity; crystallization; flashing; cavitation and noise etc would not be presence.

Fig. 1 is an example of a sensor and a transducer circuit of the EDF-IM. The sensor consists of the flow tube (1); the probe wire (2); the first exciting winding (3); the second exciting winding (4) and the balance resistor (5). The transducer consists of the differential amplifier circuit, the pre-amplifier circuit and the measuring signal-filtering amplifier circuit. The differential amplifier circuit consists the first differential amplifier input resistor (6); the second differential amplifier input resistor (7); the differential amplifier input grounding resistor (8); the differential amplifier feedback resistor (9) and the differential amplifier (10). The pre-amplifier circuit consists of the pre-amplifier input resistor (11), the pre-amplifier feedback resistor (12) and the pre-amplifier (13). The measuring signal-filtering amplifier circuit consists of the measuring signal-filtering amplifier input resistor (14); the measuring signal-filtering amplifier grounding resistor (15); the measuring signal-filtering amplifier feedback resistor (16); the measuring signal-filtering amplifier input capacitor (17); the measuring signal-filtering amplifier feedback capacitor (18); and the measuring signal-filtering amplifier (19). The functions of the circuits in Fig. 1 are the extraction and the amplification of the measuring signal.

Fig. 2 is an example of the measuring signal processing circuit and the synchronous reference signal (hereafter, SRS) circuit. The measuring signal processing circuit consists of the electric flow indicator (24) and the adder amplifier circuit. The adder amplifier circuit consists of the first adder amplifier input resistor (20); the second adder amplifier input resistor (21); the adder amplifier feedback resistor (22) and the adder amplifier (23). The SRS circuit consists of the SRS transformer (25), the SRS phase shifting circuit and the SRS filtering amplifier circuit. The phase shifting (hereafter, PS) amplifier circuit consists of the first PS voltage dividing resistor (26); the second PS voltage dividing resistor (27); the first PS capacitor (28); the first PS resistor (29); the second PS capacitor (30); the second PS resistor (31); the PS amplifier input resistor (32); the PS amplifier feedback resistor (33) and the PS amplifier (34). The SRS filtering amplifier circuit consists of the SRS filtering amplifier input resistor (35); the SRS filtering amplifier grounding resistor (36); the SRS filtering amplifier feedback resistor (37); the SRS filtering amplifier input capacitor (38); the SRS filtering amplifier feedback capacitor (39); and the SRS filtering amplifier (40). The functions of the circuits in Fig. 2 are the generation of the synchronous reference signal and extraction of the flow rate signal from the measuring signal by subtracting the amplitude of the measuring signal to the amplitude of the synchronous reference signal. As an option, a phase discriminator circuit can replace the adder amplifier circuit. The flow rate signal can be extracted from measuring signal by measuring the phase difference between the measuring signal and the synchronous reference signal.

Fig. 3 is an example of the sensor and the transducer circuits of the EDF-CM. The sensor consists of the flow tube (41); two probe electrodes (42) and (43); the first exciting winding (44); the second exciting winding (45) and the balance resistor (46). The transducer consists of the differential amplifier circuit, the pre-amplifier circuit and the measuring signal-filtering amplifier circuit. The differential amplifier circuit consists the first differential amplifier input resistor (47); the second differential amplifier input resistor (48); the differential amplifier input grounding resistor (49); the differential amplifier feedback resistor (50) and the differential amplifier (51). The pre-amplifier circuit consists of the pre-amplifier input resistor (52), the pre-amplifier feedback resistor (53) and the pre-amplifier (54). The measuring signal-filtering amplifier circuit consists of the measuring signal-filtering amplifier input resistor (55); the measuring signal-filtering amplifier grounding resistor (56); the measuring signal-filtering amplifier feedback resistor (57); the measuring signal-filtering amplifier input capacitor (58); the measuring signal-filtering amplifier feedback capacitor (59); and the measuring signal-filtering amplifier (60). The functions of the circuits in Fig. 13 are the extraction and amplification of the measuring signal.

Fig. 4 is an example of the measuring signal processing circuit and the synchronous reference signal circuit. The measuring signal processing circuit consists of the electric flow indicator (65) and the adder amplifier circuit. The adder amplifier circuit consists of the first adder amplifier input resistor (61); the second adder amplifier input resistor (62); the adder amplifier feedback resistor (63) and the adder amplifier (64). The SRS circuit consists of the SRS transformer (66), the SRS phase shifting circuit and the SRS filtering amplifier circuit. The phase shifting amplifier circuit consists of the first PS voltage dividing resistor (67); the second PS voltage dividing resistor (68); the first PS capacitor (69); the first PS resistor (70); the second PS capacitor (71); the second PS resistor (72); the PS amplifier input resistor (73); the PS amplifier feedback resistor (74) and the PS amplifier (75). The SRS filtering amplifier circuit consists of the SRS filtering amplifier input resistor (76); the SRS filtering amplifier grounding resistor (77); the SRS filtering amplifier feedback resistor (78); the SRS filtering amplifier input capacitor (79); the SRS filtering amplifier feedback capacitor (80); and the SRS filtering amplifier (81). The functions of the circuits in Fig. 4 are the generation of the synchronous reference signal and the extraction of the flow rate signal from the measuring signal by subtracting the amplitude of the measuring signal to the amplitude of the synchronous reference signal. As an option, the phase discriminator circuit can replace the adder amplifier circuit. The flow rate signal can be extracted from measuring signal by measuring the phase difference between the measuring signal and the synchronous reference signal.

**Claims**

1. An electrodynamics flow meter for measuring a flow rate of either non-conductive fluid (i.e. petrol) or conductive fluid (i.e. city water) in a pipe has two different configurations. One is electrodynamics flow meter inductance model in Fig. 1 and Fig. 2 (hereafter: EDF-IM). The other is electrodynamics flow meter capacitance model in Fig. 3 and Fig. 4 (hereafter: EDF-CM).

2. The EDF-IM as claimed in Claim 1 has at least one exciting winding (3) that radiates an alternate magnetic field into the flow and, has at least one probe wire (2) that measures the alternative electrical filed signal transformed by the flow and based on the principle of Lorentz transformation. The EDF-IM has a synchronous reference signal input via the transformer (25) for producing a synchronous reference signal of the exciting current in the winding (3). The amplitude or the phase of the synchronous reference signal can compare with the amplitude or the phase of the measuring signal to produce a flow rate signal.

3. The EDF-CM as claimed in Claim 1 has at least one exciting winding (44) that radiates an alternate magnetic field into the flow and, has at least two probe electrodes (42) and (43) that measures the alternate electrical displacement signal transformed by the flow and based on the principle of Lorentz transformation. The EDF-CM has a synchronous reference signal input via the transformer (66) for producing a synchronous reference signal of the exciting current in the winding (44). The amplitude or the phase of the synchronous reference signal can compare with the amplitude or the phase of the measuring signal to produce a flow rate signal.

Windings, Balance
Resistor and Probe Wire

Differencial
Amplifier

Pre-amplifier

Measuring signal
Filtering Amplifier

Exciting
Current Input

3

9

12

18

6

11

14

16

10

13

19

17

1

Measuring
Signal Output

5

2

15

7

8

4

Sensor

Transducer

EP 1 089 060 A1

Fig. 1

Fig.2

Measuring Signal Processing Circuit

Electrical Flow Indicator

Adder Amplifier (Option: Phase Discriminator)

Measuring Signal Input

24

22

23

20

21

Synchronous Reference Signal Circuit

Synchronous Reference Signal Filtering Amplifier

37

40

39

38

35

36

Phase-shifting Amplifier

33

34

32

31

30

29

28

27

26

25

Synchronous Reference Signal Transformer

Synchronous Reference Signal Input

Sensor

Windings, Balance Resistor and Electrodes

Exciting Current Input

44    45    46    41    42    43

Transducer

Differencial Amplifier    Pre-amplifier    Measuring signal Filtering Amplifier

47  48  49  50  51  52  53  54  55  56  57  58  59  60

Measuring Signal Output

Fig. 3

Measuring Signal Processing Circuit

Adder Amplifier (Option: Phase Discriminator)

Electrical Flow Indicator

63

65

64

Measuring Signal Input

61

62

Synchronous Reference Signal Input

66

67

69

71

73

74

76

80

78

75

81

68

70

72

77

79

Synchronous Reference Signal Transformer

Phase-shifting Amplifier

Synchronous Reference Signal Filtering Amplifier

Fig. 4

Sychronous Reference Signal Circuit

EP 1 089 060 A1

**European Patent Office**

## EUROPEAN SEARCH REPORT

Application Number

EP 99 20 3094

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 307 688 A (LEFEBVRE PAUL J) 3 May 1994 (1994-05-03) * the whole document * --- | 2,3 | G01F1/60 G01F1/58 |
| A | DE 195 35 997 A (KETELSEN BRODER ;KETELSEN ANDRES (DE)) 3 April 1997 (1997-04-03) * abstract; figure 1 * --- | 2 | |
| A | WO 87 01197 A (RHEOMETRON AG) 26 February 1987 (1987-02-26) * abstract; figure 1 * ----- | 3 | |

| | |
|---|---|
| | **TECHNICAL FIELDS SEARCHED (Int.Cl.7)** |
| | G01F |

The present search report has been drawn up for all claims

| Place of search | Date of completion of the search | Examiner |
|---|---|---|
| BERLIN | 2 February 2000 | Vorropoulos, G |

EPO FORM 1503 03.82 (P04C01)

## ANNEX TO THE EUROPEAN SEARCH REPORT
## ON EUROPEAN PATENT APPLICATION NO.

EP 99 20 3094

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2000

| Patent document cited in search report | | Publication date | Patent family member(s) | | Publication date |
|---|---|---|---|---|---|
| US 5307688 | A | 03-05-1994 | NONE | | |
| DE 19535997 | A | 03-04-1997 | CA | 2233123 A | 03-04-1997 |
| | | | WO | 9712208 A | 03-04-1997 |
| | | | EP | 0852702 A | 15-07-1998 |
| WO 8701197 | A | 26-02-1987 | AU | 6337286 A | 10-03-1987 |
| | | | EP | 0235222 A | 09-09-1987 |
| | | | JP | 6048207 B | 22-06-1994 |
| | | | JP | 63501033 T | 14-04-1988 |

EPO FORM P0459

For more details about this annex : see Official Journal of the European Patent Office, No. 12/82